**Europäisches Patentamt**

**European Patent Office**

**Office européen des brevets**

(19)

(11) Veröffentlichungsnummer : **0 374 363 B1**

(12) **EUROPÄISCHE PATENTSCHRIFT**

(45) Veröffentlichungstag der Patentschrift :
**11.11.92 Patentblatt 92/46**

(51) Int. Cl.⁵ : **F16D 23/10**

(21) Anmeldenummer : **89115207.6**

(22) Anmeldetag : **18.08.89**

(54) **Synchronkupplung mit Verriegelung.**

(30) Priorität : **22.12.88 CH 4748/88**

(43) Veröffentlichungstag der Anmeldung :
**27.06.90 Patentblatt 90/26**

(45) Bekanntmachung des Hinweises auf die
Patenterteilung :
**11.11.92 Patentblatt 92/46**

(84) Benannte Vertragsstaaten :
**FR IT NL SE**

(56) Entgegenhaltungen :
**CH-A- 213 781**
**FR-A- 2 334 010**
**GB-A- 2 134 193**
**US-A- 3 511 116**

(73) Patentinhaber : **MAAG Getriebe AG**
**Hardstrasse 219**
**CH-8023 Zürich (CH)**

(72) Erfinder : **Städeli, Otto**
**Gutschstrasse 50**
**CH-6313 Menzingen (CH)**

**Beschreibung**

Die Erfindung betrifft eine Synchronkupplung mit Verriegelung gemäß dem Oberbegriff des Anspruchs 1.

Mit mechanisch synchronisierten Zahnkupplungen, wie sie beispielsweise aus der CH-PS 499 735 bekannt sind, können Antriebsmaschinen automatisch zugeschaltet und abgekoppelt werden, ohne daß die Drehzahl oder das Drehmoment überwacht werden muß. Hierbei wird bei Gleichlauf eine Synchronisiermuffe durch eine Klinkenradverzahnung axial verschoben, wobei beim Einrücken eine Einschraubbewegung über eine Klinke auf einen Kupplungsstern übertragen wird. Hierdurch gelangt eine schrägverzahnte Einschraubverzahnung in Eingriff und überträgt nach axialem Anschlag das Drehmoment.

Bei wechselnder Drehrichtung oder bei Beschleunigung des Abtriebs wird an sich der Ausrückvorgang eingeleitet. Dies kann aber verhindert werden, wenn der Kupplungsstern und die Abtriebswelle über eine Einstellverzahnung und die Verriegelungsverzahnung, die jeweils als Geradverzahnung ausgeführt sind, formschlüssig miteinander verbunden sind.

Nachteilig hierbei ist jedoch, daß die Verriegelungsverzahnung ein Gelenk im mechanischen Sinne bildet. Hierdurch wird das Drehmoment bei Rückwärtsbetrieb über das mechanisch unbestimmte Doppelgelenk, das aus Verriegelungsverzahnung und Kupplungsverzahnung gebildet wird, übertragen. Diese Betriebsart ist daher nur kurzfristig zulässig. Regelmäßig vorkommende wechselnde Betriebsdrehmomente können wegen der Gefahr des Verschleißes der Verzahnungen und der Synchronisiermuffenlagerung nicht zugelassen werden.

Ferner ist es aus der DE-OS 24 30 615 bekannt, bei einer aus zwei axial zueinander beweglichen Teilen und einem Drehmoment übertragenden Zwischenstück bestehenden Axialkupplung zwischen dem Zwischenstück und jedem der beiden Kupplungsteile jeweils eine Schrägverzahnung, die unterschiedliche Steigung haben und so gerichtet sind, daß bei Drehmomentübertragung eine die Kupplungsteile zusammenziehende Kraft entsteht, vorzusehen. Die Zentrierung erfolgt hierbei über korrespondierende konische Flächen an den Kupplungsteilen. Die Drehmomentübertragung ist nur in einer Richtung möglich.

Aufgabe der Erfindung ist es daher, eine Synchronkupplung nach dem Oberbegriff des Anspruchs 1 zu schaffen, die sich bei einfacher Konstruktion problemlos mit wechselnden Drehmomenten betreiben läßt.

Diese Aufgabe wird entsprechend dem kennzeichnenden Teil des Anspruchs 1 gelöst.

Weitere Ausgestaltungen der Erfindung lassen sich der nachfolgenden Beschreibung und den Unteransprüchen entnehmen.

Derartige Synchronkupplungen sind beispielsweise bei Schiffsgetrieben mit Kombi- oder Umschaltantrieben verwendbar, da in Abhängigkeit von der Antriebsart (Marschfahrt, Cruising-Betrieb, Langsamfahrt oder Umkehr des Propellerschubs) zwei in Reihe geschaltete Synchronkupplungen unabhängig von der Drehrichtung Drehmoment übertragen bzw. freilaufen können. Auch können derartige Synchronkupplungen im Zusammenhang mit hydraulischen Anfahrkupplungen, die im Nennlastbetrieb mechanisch kurzgeschlossen sind, verwendet werden.

Die Erfindung wird nachstehend anhand eines in den beigefügten Abbildungen dargestellten Ausführungsbeispiels näher erläutert.

Fig. 1 zeigt schematisiert und im Schnitt eine Zahnkupplung mit Verriegelungseinrichtung in Freilaufstellung.

Fig. 2a bis 2f zeigen schematisch die Ver- bzw. Entriegelungsvorgänge bei der Kupplung von Fig. 1.

Die dargestellte Kupplung umfaßt eine antriebsseitige Kupplungsnabe 1 mit einer innenseitigen Geradverzahnung 2, mit der ein gegenüber der Kupplungsnabe 1 axial verschiebbarer Kupplungsstern 3 über eine entsprechende Geradverzahnung 4 in Eingriff steht. Innerhalb des Kupplungssterns 3 befindet sich gegenüber diesem drehbar eine Synchronisiermuffe 5, die mit dem Kupplungsstern 3 über eine Klinkenradverzahnung 6 in Eingriff steht. Die Synchronisiermuffe 5 hält den Kupplungsstern 3 axial. Die Synchronisiermuffe 5 ist drehbar auf einem Hohlwellenabschnitt 7 einer Abtriebswelle 8 angeordnet und steht mit letzterer über ein Steilgewinde 9 in Eingriff. Der Hohlwellenabschnitt 7 besitzt benachbart zur Kupplungsnabe 1 einen Bund 10 und am gegenüberliegenden Ende einen Anschlag 11, die den gemeinsamen Axialhub vorbestimmter Länge der Syncrhronisiermuffe 5 und des Kupplungssterns 3 begrenzen. Zwischen dem Hohlwellenabschnitt 7 und der Synchronisiermuffe 5 befindet sich eine Ringkammer 12, die über eine Bohrung 13 mit dem Inneren des Hohlwellenabschnitts 7 verbunden ist und in welchen Öl eingespeist wird.

Der Kupplungsstern 3 umfaßt eine oder mehrere über den Umfang verteilte Kammern, in welche Klinken 14 lose oder federvorgespannt eingelegt sind. Die Klinkennasen werden leicht auf die Klinkenradverzahnung 6 durch Zentrifugalkrafteinwirkung und-/oder Federvorspannung gedrückt. Solange die Synchronisiermuffe 5 schneller dreht als die Kupplungsnabe 1, gleitet die Klinkenverzahnung 6 frei unter den Klinken 14 weg. Kehrt jedoch die Relativdrehzahl um, d.h. die Kupplungsnabe 1 fängt an, sich schneller als die Synchronisiermuffe 5 zu drehen, rastet eine der Klinken 14 sofort in die Klinkenradverzahnung 6 ein und stellt zwischen der Kupplungsnabe 1 und der Synchronisiermuffe 5 Formschluß her.

Ferner ist eine Verriegelungshülse 15 vorgesehen, die gegenüber der Abtriebswelle 8 axial verschiebbar und radial festgelegt ist. Die Verriegelungshülse 15 ist gegen die Vorspannung von Federn 16 gegen einen Anschlag 17a der Abtriebswelle 8 und durch eine äußere Betätigungskraft, die beispielsweise durch eine hydraulisch betätigbare Schaltgabel 18 oder einen hydraulisch betätigbaren Exzenter ausgeübt wird, in Gegenrichtung gegen einen Anschlag 17b um einen vorbestimmten Hub axial verschiebbar. Die Verriegelungshülse 15 steht mit der Abtriebswelle 8 über eine Einstellverzahnung 19 in Eingriff. Außerdem weist sie in axialem Abstand hierzu eine Verriegelungsverzahnung 20 auf, die mit einer korrespondierenden Verzahnung 21 des Kupplungssterns 3 in Eingriff bringbar ist.

Zusätzlich besitzt der Kupplungsstern 3 an seinem der Abtriebswelle 8 zugewandten Ende eine Einschraubverzahnung 22, die mit einer korrespondierenden, stirnseitig angeschrägten Einschraubverzahnung 23 an der Abtriebswelle 8 benachbart zum Anschlag 11 vorgesehen ist.

Die Verriegelungsverzahnung 20, 21 und die Einstellverzahnung 19 sind derart schrägverzahnt, daß die Verriegelungsverzahnung 20, 21 und die Einschraubverzahnung 22, 23 im verriegelten Zustand eine Doppelschrägverzahnung bilden.

Es sei angenommen, daß die antreibende Welle mit der Kupplungsnabe 1 still steht und der Kupplungsstern 3 ausgerückt ist, d.h. die Einschraubverzahnungen 22, 23 sind außer Eingriff. Der Kupplungsstern 3 mit den Klinken 14 rotiert ebenfalls nicht. Die Abtriebswelle 8 dreht sich zusammen mit der Synchronisiermuffe 5, welche sich frei unter den Klinken 14 dreht. Im Ringraum 12 herrscht Öldruck, erzeugt durch die Rotation der Abtriebswelle 8, und hält über die Synchronisiermuffe 5 den Kupplungsstern 3 in ausgerückter Stellung.

Soll nun die Antriebswelle mit der bereits drehenden Abtriebswelle 8 gekuppelt werden, wird die Antriebsmaschine entsprechend hochgefahren. Das Synchronisieren und Einrücken erfolgt, indem die Kupplungsnabe 1 und der Kupplungsstern 3 mit den Klinken 14 gedreht wird. Sobald die Kupplungsnabe 1 schneller zu drehen beginnt als die Abtriebswelle 8, kehrt die Relativdrehzahl zwischen der Klinkenradverzahnung 6 und den Klinken 14 um. Eine der Klinken 14 rastet an irgendeinem Zahn der Klinkenradverzahnung 6 ein, stellt einen Formschluß zwischen der Kupplungsnabe 1 und der Synchronisiermuffe 5 her und bewirkt dadurch über das Steilgewinde 9 eine Schraubbewegung der Synchronisiermuffe 5 und damit des Kupplungssterns 3 in Richtung auf den Anschlag 11. Der Kupplungsstern 3 zieht sich gegen den Anschlag 11 fest. Die Axialkomponente der Schraubbewegung wird von der Synchronisiermuffe 5 entweder direkt oder über ein federndes Glied auf den Kupplungsstern 3 übertragen.

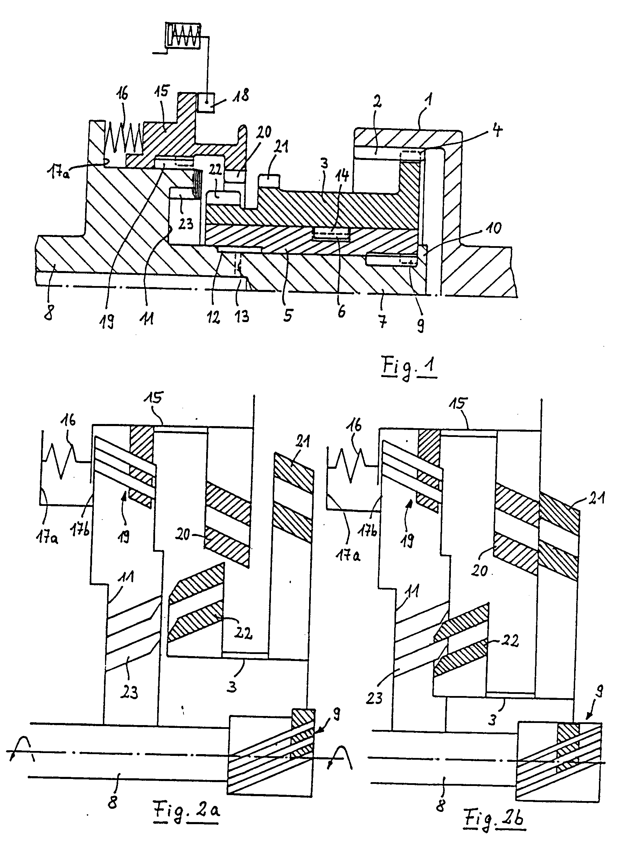

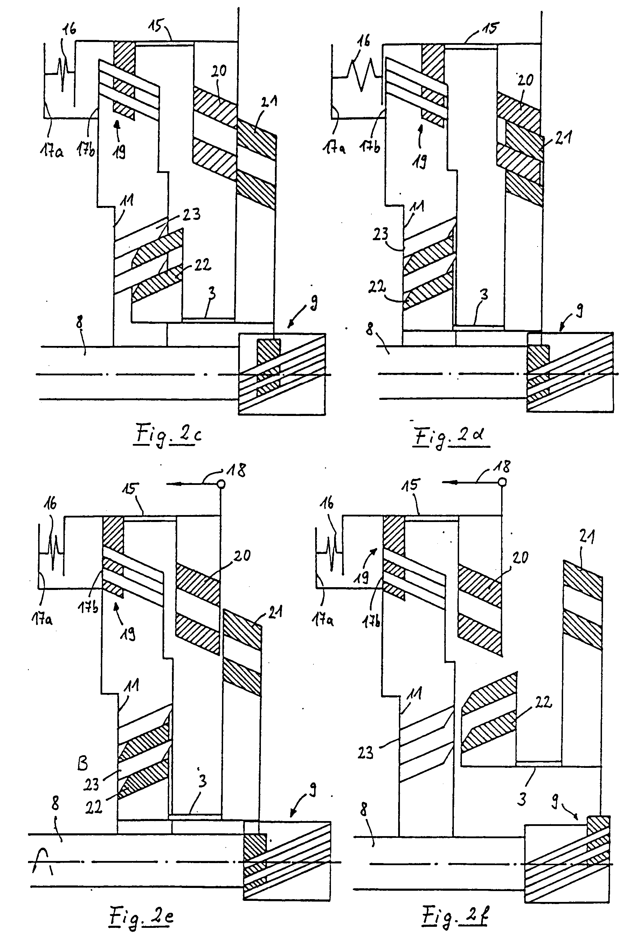

Im angenommenen Ausgangszustand, wie er in Fig. 2a dargestellt ist, befindet sich die Verriegelungshülse 15 aufgrund der auf sie einwirkenden Federvorspannung in Anlage am Anschlag 17b. Wenn der Antrieb den Abtrieb zu überholen beginnt (Fig. 2b) und der Kupplungsstern 3 schraubenförmig bewegt wird, gelangt die Einschraubverzahnung 22, 23 in Eingriff, während die Zähne der Verriegelungsverzahnung 20, 21 stirnseitig aufeinander stoßen, so daß die Verriegelungshülse 15, die durch die Einstellverzahnung 19 geführt wird, auf einer zum Kupplungsstern 3 gegenläufigen Schraubenlinie bewegt wird (Fig. 2c). Wenn die Einschraubverzahnung 22 den Anschlag 11 erreicht, steht bei der Verriegelungsverzahnung 20, 21 Zahn gegen Zahnlücke. Somit kann die gegen die Federkraft zurückgedrückte Verriegelungshülse 15 unter Federkraft einschnappen, so daß die Verriegelungsverzahnung 20, 21 in Eingriff steht (Fig. 2d).

Im verriegelten Zustand bildet die Einschraubverzahnung 22, 23 zusammen mit der Verriegelungsverzahnung 20, 21 eine Doppelschrägverzahnung. Bei Vorwärtsbetrieb erfolgt die Drehmomentübertragung im wesentlichen über die Einschraubverzahnung 22, 23 und ihren stirnseitigen Anschlag 11. Bei Rückwärtsbetrieb teilt sich das Drehmoment auf beide Schrägverzahnungen 20, 21 und 22, 23 auf, wobei bei entsprechender Wahl der Schrägungswinkel und unter Berücksichtigung der unterschiedlich grossen Teilkreisdurchmesser der Verzahnungen eine annähernd gleichmäßige Aufteilung erreicht werden kann.

Bei gleichen Schrägungswinkeln kann sich der Kupplungsstern 3 axial frei einstellen, die durch die Zahnschräge erzeugten Axialkräfte wirken gegensinnig. Sie zentrieren den Kupplungsstern 3, der somit auch bei Rückwärtsbetrieb starr mit der Antriebsseite der Kupplung verbunden bleibt. Die selbstzentrierende Wirkung der gebildeten Doppelschrägverzahnung legt den Kupplungsstern 3 in radialer Richtung fest, Gleitlager, die im Bereich der Klinkenverzahnung 6 vorgesehen sind, werden entlastet.

Der Ausrückvorgang wird bei entlasteten Rückflanken der Verriegelungsverzahnung 20, 21 und der Einschraubverzahnung 22, 23 eingeleitet. Die Verriegelungshülse 15 wird durch die äußere Betätigungskraft (Schaltgabel 18) ausgerückt, Fig. 2e. Bei Beschleunigung der Antriebsseite wird der Kupplungsstern 3 über die Klinkenradverzahnung 6 ausgerückt, Fig. 2f. Nach Aufheben der äußeren Betätigungskraft ist die Verriegelungshülse 15 wieder betriebsbereit.

**Patentansprüche**

1. Synchronkupplung mit einer geradverzahnten Kupplungsnabe [1], einem axial hierzu verschiebbaren und hiermit in Eingriff stehenden Kupplungsstern [3] und einer im Kupplungsstern [3] axial gehaltenen und mit diesem ueber eine Klinkenradverzahnung [6] in Eingriff stehende Synchronisiermuffe [5], die ueber ein Steilgewinde [9] mit einer Abtriebswelle [8] axial verschiebbar in Eingriff steht, wobei eine Verriegelungsverzahnung [20] mit einer korrespondierenden Verzahnung [21] des Kunplungssterns [3] in Eingriff bringbar und abtriebswellenseitig und kupplungssternseitig eine in Eingriff bringbare Einschraubverzahnung [22, 23] vorgesehen ist, dadurch **gekennzeichnet**, dass eine Verriegelungshuelse [15], die mit der Abtriebswelle [8] ueber eine Einstellverzahnung [19] um einen vorbestimmten Axialhub gegenueber der Antriebswelle verstellbar in Eingriff steht, vorgesehen ist, wobei die Einstellverzahnung [19] und die Verriegelungsverzahnung [20, 21] als Schraegverzahnungen derart ausgebildet sind, dass die Verriegelungsverzahnung [20, 21] und die Einschraubverzahnung [22, 23] zusammen im verriegelten Zustand eine Doppelschraegverzahnung bilden, wobei die Ein- bzw. Ausrueckbewegungen beider Schraegverzahunungen [21, 22] der Doppelschraegverzahnung auf dem Kupplungsstern [3] mit seinem Axialhub jeweils in der gleichen axialen Richtung erfolgt, wodurch bei eingerueckter Kupplung - unabhaengig von der Drehrichtung - das Ausruecken der Kupplung durch Formschluss verhindert wird.

2. Synchronkupplung nach Anspruch 1, dadurch gekennzeichnet, daß die Schrägungswinkel der Schrägverzahnungen (20, 21 und 22, 23) unter Berücksichtigung der unterschiedlich großen Teilkreisdurchmesser derart gewählt sind, daß bei Rückwärtsbetrieb das Drehmoment auf beide Schrägverzahnungen gleichmäßig aufgeteilt ist.

3. Synchronkupplung nach Anspruch 1 oder 2, dadurch gekennzeichnet, daß die Schrägungswinkel der Schrägverzahnungen (20, 21 und 22, 23) gleich sind.

4. Synchronkupplung nach einem der Ansprüche 1 bis 3, dadurch gekennzeichnet, daß die Verriegelungshülse (15) gegenüber der Abtriebswelle (8) in Richtung auf den Kupplungstern (3) federvorgespannt ist.

5. Synchronkupplung nach einem der Ansprüche 1 bis 4, dadurch gekennzeichnet, daß eine äußere Betätigungseinrichtung (18) zum axialen Verschieben der Verriegelungshülse (15) zum Ausrücken vorgesehen ist.

## Claims

1. Synchronized clutch with a straight-toothed clutch hub [1], a radial clutch [3] which is axially displaceable and engaged thereto, a synchronizing bush [5], which is axially held in the radial clutch [3] and engaged thereto by means of a ratchet tooth arrangement [6] and axially displaceably engaged to an outputshaft [8] via a high thread [9], in which respect a locking tooth arrangement [2Ø] is engageable to a corresponding toothing [21] of the radial clutch [3] and screw-in toothing [22, 23] is provided on the outputshaft and on the radial clutch, **characterised in that** a locking sleeve [15] is provided which is engaged to the outputshaft [8] via an adjustment toothing arrangement [19] so as to be adjustable by a specified axial stroke relative to the driveshaft, in which respect the adjustment toothing arrangement [19] and the locking tooth arrangement [2Ø, 21] are helically toothed arranged in such a manner that the combined locking tooth arrangement [2Ø, 21] and the screw-in toothing [22, 23] in their locked state form a double helical toothing, whereby the engaging or disengaging movements of both helical toothing arrangements [21, 22] of the double helical toothing is carried out on the radial clutch [3] with its axial stroke in a respective same axial direction, thereby preventing a disengagement of the clutch due to positive connection, whilst the clutch is engaged.

2. Synchronized clutch according to claim 1, **characterised in that** the slant angle of the helical toothing (2Ø, 21 and 22, 23) is selected whilst taking into consideration differently sized pitch diameters so that the torque is evenly divided between both helical toothing arrangements during reverse operation.

3. Synchronized clutch according to claim 1 or 2, **characterised in that** slant angles of the helical toothing arrangements (2Ø, 21 and 22, 23) are equal.

4. Synchronized clutch according to one of claims 1 to 3, **characterised in that** the locking sleeve (15) is pretensioned by a spring relative to the outputshaft (8) in the direction of the radial clutch (3).

5. Synchronized clutch according to one of claims 1 to 4, **characterised in that** an external operating device (18) for axial displacement of the locking sleeve (15) is provided for the purpose of disengagement.

## Revendications

1. Embrayage de synchronisation, comportant un moyeu d'embrayage (1) à denture droite, une étoile d'embrayage (3), déplaçable axialement par rapport au moyen (1) et en contact avec lui et un manchon de synchronisation (5), maintenu axialement dans l'étoile d'embrayage (3) et en contact avec celle-ci par l'intermédiaire d'une denture à roue à rochet (6), en prise avec possibilité de déplacement axial avec un arbre entraîné (8), par l'intermédiaire d'un filetage rapide (9), dans lequel une denture de verrouillage (20) et susceptible d'engrener avec une denture (21) correspondante de l'étoile d'embrayage (3), une denture de vissage (22,23) étant prévue du côté de l'arbre entraîné et du côté de l'étoile d'embrayage, susceptibles d'être mis en contact, caractérisé en ce qu'il comporte un manchon de verrouillage (15), en contact avec l'arbre entraîné (8) par l'intermédiaire d'une denture de réglage (19), de façon réglable sur une course axiale prédéterminée par rapport à l'arbre d'entraînement, la denture de réglage (19) et la denture de verrouillage (20,21) étant réalisées sous forme de dentures inclinées, de telle façon que la denture de verrouillage (20,21) et la denture de vissage (22,23) forment conjointement, à l'état verrouillé, une denture à double inclinaison, les mouvements d'engagement et de dégagement des deux dentures inclinées (21,22) de la denture à double inclinaison sur l'étoile d'embrayage (3) avec sa course axiale, s'effectuant chaque fois dans le même sens axial, faisant que, lorsque l'embrayage est engagé - indépendamment du sens de rotation - le dégagement de l'embrayage est empêché par le verrouillage mutuel des formes de ces dentures.

2. Embrayage de synchronisation selon la revendication 1, caractérisé en ce que les angles d'inclinaison des dentures inclinées (20,21 et 22,23) sont choisis en tenant compte de la différence de leurs cercles primitifs, de telle façon qu'en cas de fonctionnement en marche arrière, le couple de rotation soit réparti également sur les deux dentures inclinées.

3. Embrayage de synchronisation selon les revendications 1 et 2, caractérisé en ce que les angles d'inclinaison des dentures inclinées (20,21 et 22,23) sont égaux.

4. Embrayage de synchronisation selon la revendication 1, caractérisé en ce que le manchon de verrouillage (15) est précontraint par un ressort vis à vis de l'arbre entraîné (8), en direction de l'étoile d'embrayage (3).

5. Embrayage de synchronisation selon la revendication 1, caractérisé en ce qu'un dispositif d'actionnement extérieur (18), destiné à déplacer axialement le manchon de verrouillage (16), est prévu, en vue d'obtenir le dégagement des dentures.

Fig. 1

Fig. 2a

Fig. 2b

Fig. 2c

Fig. 2d

Fig. 2e

Fig. 2f